(19) Europäisches Patentamt
European Patent Office
Office européen des brevets

(11) **EP 3 605 145 B1**

(12) **FASCICULE DE BREVET EUROPEEN**

(45) Date de publication et mention de la délivrance du brevet:
**02.03.2022 Bulletin 2022/09**

(21) Numéro de dépôt: **19189161.3**

(22) Date de dépôt: **30.07.2019**

(51) Classification Internationale des Brevets (IPC):
**G01S 13/88** *(2006.01)*    **G01S 13/34** *(2006.01)*
**G01S 7/35** *(2006.01)*

(52) Classification Coopérative des Brevets (CPC):
**G01S 13/882; G01S 13/345; G01S 13/347;**
G01S 7/356

(54) **PROCÉDÉ DE TRAITEMENT DISTANCE HAUTE RÉSOLUTION**

HOCHAUFLÖSENDES FERNVERARBEITUNGSVERFAHREN

HIGH-RESOLUTION REMOTE PROCESSING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2018 FR 1800838**

(43) Date de publication de la demande:
**05.02.2020 Bulletin 2020/06**

(73) Titulaire: **Thales**
**92400 Courbevoie (FR)**

(72) Inventeurs:
• **MAZEAU, Thierry**
**33701 Merignac Cedex (FR)**
• **GARREC, Patrick**
**33700 Merignac (FR)**

(74) Mandataire: **Marks & Clerk France**
**Immeuble "Visium"**
**22, avenue Aristide Briand**
**94117 Arcueil Cedex (FR)**

(56) Documents cités:
EP-A1- 2 339 369      EP-A1- 2 605 037
EP-A1- 3 121 619      EP-B1- 2 339 369
GB-A- 2 248 359

**Description**

*DOMAINE DE L'INVENTION*

L'invention se rapporte au domaine général des systèmes aéroportés, des hélicoptères ou des aéronefs avec (avions) ou sans (drones) pilote par exemple.

Elle se rapporte plus particulièrement aux mesures de distance et de vitesse réalisées par un radar embarqué à bord de l'un ou l'autre de ces engins.

*CONTEXTE DE L'INVENTION - ART ANTERIEUR*

Pour réaliser une mesure de distance au moyen d'un radar aéroporté il est connu d'adopter un mode de fonctionnement mettant en œuvre une forme d'onde constituée par une émission récurrente, de durée d'émission $T_E$, modulée linéairement en fréquence au cours du temps. En effet, une telle forme d'onde permet de manière connue de déterminer, de manière simple, le retard $\tau$ entre le signal émis $e(t)$ et le signal reçu $r(t)$, en considérant les représentations temps-fréquence correspondantes.

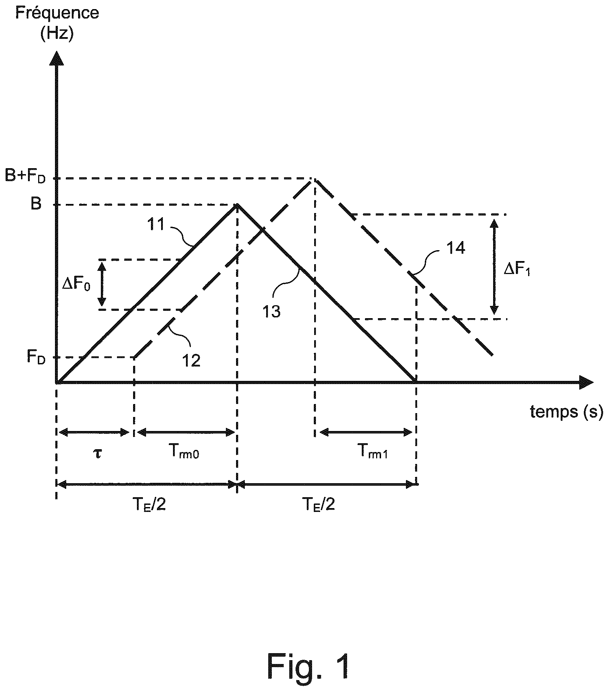

Le principe de base d'un tel mode de fonctionnement est illustré par la figure 1. Ce principe consiste à émettre un signal $e_0(t)$ dont la fréquence présente, une variation linéaire positive pendant la première moitié d'un intervalle de temps *TE* et un signal *e1(t)* dont la fréquence présente une variation linéaire négative pendant la seconde moitié du même intervalle de temps; la fréquence du signal émis variant dans une bande *B*.

Le signal radioélectrique émis $e_0(t)$, rayonné par une antenne en direction du sol, est ici modulé linéairement en fréquence en fonction du temps, de sorte qu'il a pour expression:

$$e_0(t) = e^{i2\pi K t^2} \qquad\qquad [1]$$

avec $K = \dfrac{B}{T_E}$ , *B* représentant la bande de fréquences émise et $T_E$ le temps d'émission, ou temps d'éclairement.

De même, le signal $r_0(t)$, réfléchi par le sol consécutivement à cette émission et reçu par le radar, est un signal également modulé linéairement en fréquence, dont la fréquence varie sur une bande *B*, qui présente, par rapport au signal émis $e_0(t)$, un décalage temporel, un retard, $\tau$, et un décalage en fréquence $f_D$ dû à l'effet Doppler engendré par le mouvement du porteur, fonctions de la distance d séparant le radar du sol.

Par suite, le signal réfléchi reçu par le radar a pour expression générale:

$$r_0(t) = e^{i.2.\Pi(Kt(t-\tau)+f_D t)} = e_0(t) \cdot e^{i.2.\Pi(-K\tau+f_D)t} \qquad\qquad [2]$$

De sorte que le les transpositions obtenues après mélange de $r_0(t)$ et $e_0(t)$ ont pour expressions :
$r_0(t) \cdot e_0(t)$ qui sera éliminée après filtrage et

$$\frac{r_0(t)}{e_0(t)} = e^{i.2.\Pi(-K\tau+f_D)t} \qquad\qquad [3]$$

De manière connue, le retard $\tau$ de *r(t)* par rapport à e(t) est égal à $\tau = \dfrac{2.d}{c}$ où c représente la vitesse de la lumière dans le vide.

Les signaux $e_1(t)$ et *r1(t)* présentent quant à eux, respectivement, des expressions similaires à $e_0(t)$ et $r_0(t)$ moyennant une translation temporelle égale à $T_E/2$.

Dans une représentation dans le plan temps/fréquence le signal *e(t)* peut être défini, pour des instants compris entre 0 et $T_E/2$, par l'équation normalisée suivante :

$$E_0(t) = Kt \qquad\qquad [4]$$

$E_0(t)$ représente la valeur de la fréquence du signal *e(t)* à l'instant *t* considéré. Il se présente comme une rampe de fréquence avec un coefficient $K$.

De manière analogue, le signal $r(t)$ peut être défini, pour des instants compris entre 0 et $T_E/2$, par l'équation normalisée suivante :

$$R_{0(t)} = K(t - \tau) + f_D \qquad [5]$$

$R_0(t)$ représente la valeur de la fréquence du signal $r_0(t)$ à l'instant $t$ considéré. Il se présente comme une rampe de fréquence semblable à $E_0(t)$ mais décalée d'un intervalle de temps $\tau$ sur l'axe des x (axe des abscisses) et d'une fréquence $f_D$ sur l'axe des y (axe des fréquences); $\tau$ eprésentant le retard lié à la distance d entre le radar et le sol et $f_D$ la fréquence Doppler.

Dans cette représentation temps/fréquence, la différence entre le signal reçu $R_0(t)$ et le signal émis $E_0(t)$ apparait donc comme une grandeur fréquentielle constante égale à :

$$\Delta F_0 = -K.\tau + f_D \qquad [6]$$

De manière analogue, les signaux $e_1(t)$ et $r_1(t)$ peuvent être définis, pour des instants compris entre $T_E/2$ et $T_E$, par les équations normalisées suivantes :

$$E_1(t) = -Kt + B \qquad [7]$$

et

$$R_{1(t)} = -K.(t - \tau) + B + f_D \qquad [8]$$

$E_1(t)$ se présente donc comme une rampe de fréquence descendante depuis une valeur $B$ avec un coefficient $K$ et $R_1(t)$ comme une rampe de fréquence semblable à $E_1(t)$ mais décalée d'un intervalle de temps $\tau$ sur l'axe des x (axe des abscisses) et d'une fréquence $f_D$ sur l'axe des y (axe des fréquences).

La différence entre le signal reçu $R1(t)$ et le signal émis $E1(t)$ apparait donc comme une grandeur fréquentielle constante égale à :

$$\Delta F_1 = K.\tau + f_D \qquad [9]$$

Par suite, En considérant les relations [6] et [9], on peut écrire:

$$S = \Delta F_1 + \Delta F_0 = 2f_D \qquad [10]$$

$$E = \Delta F_1 - \Delta F_0 = 2K \cdot \tau \qquad [11]$$

Ainsi si l'on considère ces grandeurs $E$ et $S$, on constate que leurs mesures permettent avantageusement de déterminer respectivement la fréquence Doppler $F_D$ et le retard $\tau$.

Cependant dans le contexte de la présente invention, on s'intéresse seulement à la détermination de la distance, au travers de $\tau$, de sorte que seule la relation [13] est mise à profit.

Il est à noter ici que les grandeurs $E_i(t)$, $R_i(t)$, $\Delta F_i$, $S$ et $E$ sont homogènes à des fréquences et que $E$, différence de fréquences, est toujours positif puisqu'il est proportionnel à la distance.

L'expression de e(t) dans le domaine amplitude/temps est donnée par la relation suivante :

$$e(t) = Ae^{-i4\pi K\tau t} \qquad [12]$$

où $4\pi$-$K\tau$ représente $2\pi$ fois la fréquence de variation de $E$

En pratique les signaux $\Delta F_1$ et $\Delta F_0$ sont échantillonnés avec une fréquence $F_{éch}$. Le signal $e^* = e(n.T_{éch})$,

obtenu par soustraction des échantillons de $\Delta F_1(n.T_{éch})$ et $\Delta F_0(n.T_{éch})$, est constitué par une suite d'échantillons $e*$, et peut faire l'objet d'une décomposition spectrale, par exemple par FFT, le spectre formé étant constitué d'échantillons fréquentiels notés $E_{(F)}*$.

Par suite la détermination du spectre du signal $e*$, permet de déterminer la fréquence, $K\tau$, du signal $e*$ et par suite le retard $\tau$ et donc la distance d que l'on souhaite mesurer.

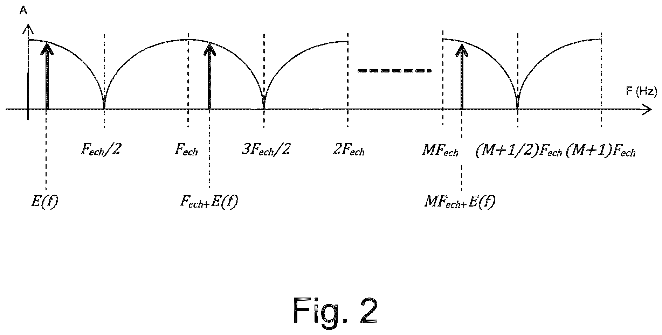

On rappelle, cependant, comme l'illustre la figure 2, que le spectre du signal $e*$, signal e(t) échantillonné à la fréquence $F_{éch}$, se présente comme un spectre élémentaire de largeur égale à $F_{éch}$, répliqué dans l'espace des fréquences avec une périodicité égale à $F_{éch}$.

Par suite la décomposition spectrale de $e*$ permet de déterminer, de manière non ambiguë, le spectre de fréquences (la fréquence centrale) du signal $E_{(F)}*$ pour autant que la bande de fréquences occupée par $E_{(F)}*$ soit inférieure à $F_{éch}/2$.

Si, la bande de fréquence occupée par $E_{(F)}*$ est supérieure à cette valeur, on assiste, de manière connue, à un repliement du spectre de $E_{(F)}*$ dans une bande $[-F_{éch}/2, F_{éch}/2]$ répliquée de manière périodique autour de fréquences multiples de la fréquence $F_{éch}$. Dans ce dernier cas la fréquence du signal $e*$ (et donc le retard $\tau$) ne peut être déterminée que modulo $F_{éch}$.

Pour s'affranchir des problèmes d'ambiguïté générés par l'échantillonnage du signal $e*$, une solution connue consiste à augmenter la fréquence d'échantillonnage $F_{éch}$ de façon à s'assurer que, pour la résolution spectrale considérée, la fréquence ambiguë se situe au-delà de la fréquence maximale du signal $e*$.

Cependant, une telle façon de procéder nécessite d'augmenter le nombre des coefficients de la FFT utilisée pour la décomposition spectrale, et donc de traiter un nombre plus important d'échantillons de signal, faute de quoi on assiste à une dégradation de la résolution en fréquence (et donc de la résolution en distance) de la réponse spectrale obtenue. Or un tel accroissement de la charge de calcul nécessite de disposer de capacités de calcul suffisantes pour réaliser, dans le temps disponible, un calcul de FFT sur un nombre de points suffisants.

Par suite, selon la valeur de la fréquence f du signal $e*$, il est parfois difficile, à moins de disposer des capacités de calcul nécessaires, de réaliser une mesure de distance sur une plage de distance donnée avec une résolution satisfaisante, à partir de la simple décomposition spectrale par FFT du signal $e*$ décrit précédemment.

Dans un tel contexte, on est contraint d'utiliser une méthode de détermination alternative, ou de mettre en œuvre des étapes de traitement complémentaires.

La demande de brevet européen déposée par le demandeur et publiée sous la référence EP2605037A1 propose une méthode de mesure alternative à celle décrite précédemment, qui met en œuvre trois voies émission/réception séparées; le signal traité par chaque voie, constitué par la répétition d'un signal de durée $T_E$ constitué d'une rampe de fréquence positive de durée $T_E/2$ suivie d'une rampe négative de durée $T_E/2$, étant échantillonné et décomposé spectralement.

Un document GB 2 248 359 A divulgue un procédé de résolution du couplage distance/Doppler dans un radar à balayage de fréquences. Un document EP 2339369 A1 divulgue un procédé de détection radar pour radar aéroportés mettant en œuvre une fonction de détection et d'évitement d'obstacles.

*PRESENTATION DE L'INVENTION*

Un but de l'invention est de proposer une solution permettant de tirer avantage de l'utilisation d'un mode de fonctionnement simple, basée sur l'émission de rampes de fréquence, pour mesurer la distance radar-sol par simple analyse spectral par FFT du signal échantillonné $e*$ décrit précédemment, résultant du mélange du signal reçu r(t) et du signal émis e(t), tout en permettant de s'affranchir des inconvénients induits par d'éventuelles ambiguïtés en distance résultant de l'échantillonnage à $F_{éch}$.

L'apparition d'ambiguïtés est induite par le compromis devant être réalisé entre l'utilisation d'une fréquence d'échantillonnage suffisante pour éviter toute ambiguïté spectrale, le nombre de mesures sur lequel la FFT doit être effectuée pour obtenir la résolution spectrale souhaitée et la capacité de calcul disponible pour effectuer une FFT sur le nombre de points voulu.

A cet effet l'invention a pour objet, un procédé pour déterminer en temps réel la distance, d, au sol d'un aéronef par mesures radar, ladite distance d étant déterminée, pour une plage de distances s'étendant jusqu'à une distance $d_{max}$ donnée, avec une résolution constante $R_{d0}$ donnée.

Le procédé selon l'invention met en œuvre les opérations suivantes :

- l'émission d'au moins deux rampes de fréquence successives et la réception des signaux réfléchis par le sol consécutivement à ces émissions ;
- la constitution, à partir des signaux réfléchis reçus de deux signaux $E_0(t)$ et $E_1(t)$ correspondant chacun au signal réfléchi $r_0(t)$ ou $r_1(t)$ provenant des émissions successives de deux formes d'ondes $e_0(t)$ et $e_1(t)$, après démodulation des signaux $r_0(t)$ et $r_1(t)$ par l'onde correspondante $e_0(t)$ ou $e_1(t)$ et échantillonnage du signal démodulé à une fréquence donnée $F_{éch}$; lesdites formes d'ondes $e_0(t)$ et $e_1(t)$ étant représentées dans un espace «temps-fréquence» par deux rampes de fréquence présentant des pentes de variation respectives $K_0$ et $K_1$, sur deux bandes de fréquence $B_0$ et $B_1$ dont le rapport $B_1/B_0$ est un nombre entier donnée, la bande $B_0$ étant déterminée en fonction de la résolution distance $R_{d0}$ par la relation:

$$B_0 = {}^c/2\mathrm{R}_{d0},$$

la pente $K_1$ étant déterminée en fonction de la distance $d_{max}$ par la relation:

$$K_1 = \frac{c}{2} \cdot \frac{F_{éch}}{2\alpha \cdot d_{1max}};$$

les pentes $K_0$ et $K_1$ étant respectivement données par les relations

$$K_0 = {}^{B_0}/_{T_{E0}} \text{ et } K_1 = {}^{B_1}/_{T_{E1}}$$

Où $T_{E0}$ et $T_{E1}$ représentent les durées d'émission respectives des formes d'ondes $e_0(t)$ et $e_1(t)$;
- l'application d'une FFT, sur N échantillons, sur les signaux $E_0(t)$ et $E_1(t)$ et la détermination des composantes spectrales $E_0$ et $E_1$ correspondant auxdits signaux, $E_0$ correspondant à la composante de plus basse fréquence du spectre de $E_0(t)$;
- la détermination, à partir des composantes spectrales $E_0$ et $E_1$, des distances mesurées $d_0$ et $d_1$ au moyen des formes d'ondes $e_0(t)$ et $e_1(t)$ correspondant respectivement aux composantes spectrales $E_0$ et $E_1$, $d_0$ et $d_1$ étant donnés par les relations :

$$d_0 = \frac{c}{2} \cdot \frac{E_0}{\alpha K_0}$$

et

$$d_1 = \frac{c}{2} \cdot \frac{E_1}{\alpha K_1}$$

- la détermination, à partir de $d_0$ et $d_1$, de la distance $d$ à mesurer, $d$ étant donnée par la relation :

$$d = M \cdot d_{0max} + d_0$$

avec

$$d_{0max} = \frac{c}{2} \cdot \frac{F_{0max}}{\alpha K_0} = \frac{c}{2} \cdot \frac{F_{éch}}{2\alpha K_0}$$

et

$$M = INT\left(\frac{d_1}{d_{0max}}\right) = INT(2 \cdot E_1 \cdot \mathrm{T}_{éch}).$$

Selon un mode de mise en œuvre préféré, le procédé selon l'invention, comporte principalement les étapes suivantes:
- une première étape durant laquelle on détermine les pentes $K_0$ et $K_1$, et des bandes de fréquence $B_0$ et $B_1$ caractérisant les deux signaux $e_0(t)$ et $e_1(t)$ ainsi que les durées d'émission $T_{E0}$ et $T_{E1}$ de ces deux signaux; cette première étape étant réalisée en prenant en compte les paramètres suivants:

- distance maximale mesurée: $d_{max}$,
- résolution distance demandée: $R_{d0}$,
- fréquence d'échantillonnage des signaux reçus par le radar: $F_{éch}$,
- nombre $N$ de points sur lesquels la décomposition spectrale des signaux doit être effectuée;
- Une deuxième étape d'émission durant laquelle:
- le radar émet au moins deux ondes correspondant à un type d'émission choisi, au moins une de ces ondes consistant en une rampe de fréquence de bande $B_0$ et de pente $K_0$;
- le radar reçoit les signaux réfléchis résultant de la réflexion par le sol des ondes émises;
- On forme les signaux $E_0(t)$ et $E_1(t)$ à partir des signaux réfléchis reçus;
- une troisième étape durant laquelle on réalise la décomposition spectrale par FFT sur $N$ points des signaux $E_0(t)$ et $E_1(t)$ et la détermination des composantes spectrales $E_0$ et $E_1$;
- une quatrième étape durant laquelle on réalise le calcul de la distance d à partir de $E_0$ et $E_1$.

Par ailleurs selon diverses dispositions pouvant être considérées chacune séparément ou en combinaison; le procédé selon l'invention peut par ailleurs présenter les caractéristiques techniques ci-après.

Ainsi, selon une disposition particulière, la quatrième étape comporte:

- une première sous-étape de calcul de la distance $d_1$ définie par:

$$\dot{d}_1 = \frac{c}{2} \cdot \frac{G_1}{\alpha K_1}$$

où $G_1$ représente la partie entière du spectre de $E1(t)$

- une deuxième sous-étape de calcul du facteur d'échelle $M$ défini par:

$$M = INT\left(\frac{2E_1}{F_{éch}}\right);$$

- une troisième sous-étape de calcul de la distance $d_0$ définie par:

$$d_0 = \frac{c}{2} \cdot \frac{H_0}{\alpha K_0}$$

où $H_0$ représente la partie entière de la valeur de la première raie spectrale, $E_0$, du spectre de $E0(t)$;

- une quatrième sous-étape de calcul de la distance $d$, définie par:

$$d = M \cdot d_{0max} + d_0.$$

Selon une autre disposition particulière, les formes d'ondes émises par le radar au cours de la deuxième étape du procédé consistent en une première rampe de fréquence $e_0(t)$ de bande $B_0$ et de pente $K_0$ suivie d'une seconde rampe de fréquence $e_1(t)$ de bande $B_1$ et de pente $K_1$.

Selon une disposition particulière, le signal $e_0(t)$ et le signal $e_1(t)$ ont des durées d'émission respective $T_{E0}$ et $T_{E1}$ distinctes et occupent une même bande de fréquence $B$, de sorte que leurs pentes respectives $K_0$ et $K_1$, ont pour expression:

$$K_0 = \frac{B}{T_{E0}} \text{ et } K_1 = \frac{B}{T_{E1}}.$$

Selon une autre disposition particulière, les signaux $E_0(t)$ et $E_1(t)$ sont obtenu après démodulation des signaux reçus $r_0(t)$ et $r_1(t)$ par les signaux émis $e_0(t)$ et $e_1(t)$, les signaux $E_0(t)$ et $E_1(t)$ étant ensuite échantillonnés au cours de la troisième étape à la fréquence $F_{éch}$ pour obtenir les signaux $E_0^*(t)$ et $E_1^*(t)$ , dont on réalise l'analyse spectrale par FFT.

Selon une autre disposition particulière, les formes d'ondes émises par le radar au cours de la deuxième étape du procédé consistent en une suite récurrente de $N$ rampes de fréquence identiques $e_0(t-nT_{E0})$, décalées dans le temps les unes des autres d'une durée $T_{E0}$ égale au temps d'émission d'une rampe, de bande $B$ et de durée $T_{E0}$.

Selon une autre disposition particulière, pour chacune des $N$ rampes de fréquence émises, on échantillonne le signal $E_0(t)$ obtenu par démodulation du signal reçus par le signal émis pour obtenir le signal $E_0^*(t)$ correspondant, puis on construit un signal $E_1^*(t)$ en considérant un échantillon du signal $E_0^*(t)$ formé pour chacune des $N$ rampes émise, le signal $E_1^*(t)$ étant constitué des $N$ échantillons ainsi prélevés.

Selon une autre disposition particulière, pour la nième rampe de fréquence $e_0(t)$ émise on démodule le signal reçu $r_0(t)$ en appliquant un déphasage égal à $n \cdot \dfrac{2.\pi}{N}$ sur l'oscillateur locale du récepteur radar.

Selon une autre disposition particulière, pour chacun des $N$ signaux $E_0^*(t)$ formés, on prélève l'échantillon correspondant à l'instant $t_n$ déterminé par l'expression :

$$t_n = n \cdot T_0 + n \cdot \frac{T_0}{N}$$

dans laquelle $n$ représente le rang, dans la suite de rampe de rampes de fréquence émises, de la rampe de fréquence $n$ correspondant au signal $E_0^*(t)$ considéré.

D'un point de vue fonctionnel, Le procédé réalise ainsi une mesure de la distance $d$ au sol d'un aéronef, avec une résolution distance $R_{d0}$ donnée et pour une plage de mesure s'étendant jusqu'à une distance $dmax$ donnée, en procédant à la manière d'un vernier présentant une échelle de mesure principale permettant une mesure $d_1$ de distance sur la plage de valeurs voulue (de 0 à $d_{max}$) avec une résolution donnée $R_{d1}$ et une échelle de mesure complémentaire permettant de corriger la mesure de distance précédente au moyen d'une mesure $d_0$, valable sur une plage de distances $d_{0max}$, inférieure à $d_{max}$, obtenue avec la résolution voulue.

*DESCRIPTION DES FIGURES*

Les caractéristiques et avantages de l'invention seront mieux appréciés grâce à la description qui suit, description qui s'appuie sur les figures annexées qui présentent:

la figure1, une représentation simultanée dans un repère temps-fréquence d'un signal d'émission en double rampe de fréquence montante et descendante et du signal reçu par le radar après réflexion sur le sol;

la figure 2, une représentation fréquentielle illustrant le phénomène d'ambigüité en fréquence pouvant être induit par l'échantillonnage à une fréquence $F_{éch}$ du signal e(t) résultant d'une forme d'onde telle que celle illustrée par figure 1 ;

La figure 3, un organigramme de principe des différentes étapes du procédé selon l'invention;

La figure 4, un organigramme de principe des différentes sous-étapes de la quatrième étape du procédé selon l'invention;

la figure 5, Une illustration du principe de fonctionnement du procédé selon l'invention;

les figures 6a et 6b, les représentations dans un repère temps-fréquence de deux variantes d'un premier exemple de forme d'onde permettant la mise en œuvre du procédé selon l'invention et des formes d'ondes reçues par le radar après réflexion sur le sol;

les figures 7 et 8, des représentations dans un repère temps-fréquence d'un second exemple de forme d'onde permettant la mise en œuvre du procédé selon l'invention selon une seconde forme de mise en œuvre.

Il est à noter que, sur les figures annexées, un même élément fonctionnel ou structurel porte, de préférence, un même symbole repère.

*DESCRIPTION DETAILLEE*

Comme il a été dit précédemment, le procédé selon l'invention met en œuvre le principe consistant à émettre un type de forme d'onde simple constitué de rampes de fréquence successives et à déterminer la distance d qui sépare l'aéronef du sol en calculant l'écart de fréquence et le retard existant entre le signal *e(t)* (une rampe de fréquence) émis par le radar et le signal *r(t)* réfléchi par le sol et reçu par ce même radar.

Pour ce faire le procédé selon l'invention mets en œuvre un traitement comportant les opérations décrites ci-après, en considérant le signal *E(t)* obtenu comme indiqué précédemment:

$$E(t) = \frac{r(t)}{e(t)} = e^{i.2.\Pi(-K\tau + f_D)t},$$

dont la représentation dans un espace temps-fréquence est défini par la relation suivante

$$\Delta F = -K.\tau + F_D$$

Selon l'invention, le signal $\Delta F$ est échantillonné à la fréquence $F_{éch}$ de sorte que le signal $e^* = e(n.T_{éch})$ obtenu après échantillonnage est constitué de *M* échantillons.

Le signal $e^*$ fait ensuite l'objet d'une décomposition spectrale, par FFT sur *N* ppoints de manière préférentielle, le spectre $E^*(F)$ ainsi formé étant constitué de *N* échantillons fréquentiels.

Il est à noter que l'on considère le signal ainsi formé comme étant essentiellement fonction du retard $\tau$, la fréquence $f_D$ étant considérée comme généralement négligeable pour autant que l'on choisisse en ce sens la pente de variation Kde la rampe de fréquence émise.

Les opérations décrites précédemment sont exécutées en considérant successivement deux valeurs de pente de variation $K_0$ et $K_1$ de sorte que l'on obtient, après exécution, deux spectres $E_0^*(F)$ et $E_1^*(F)$. Ces deux spectres sont ensuite exploités conjointement.

Selon l'invention, les pentes $K_0$ et $K_1$ des signaux considérés, sont déterminées en prenant en compte les exigences de mesure constituées par la valeur de distance maximale $d_{max}$, ainsi que la résolution en distance $R_{do}$ souhaitée pour la mesure de distance effectuée. La pente $K_0$ est déterminée de façon à obtenir un signal $E_0(t)$ dont la bande passante permet d'obtenir la résolution distance souhaitée, tandis que la pente $K_1$ est déterminée de façon à mesurer des valeurs de distance d s'étendant jusqu'à une valeur $d_{max}$. Par suite la pente $K_1$ est de valeur plus faible que la pente $K_0$. Ces deux pentes sont par ailleurs déterminées par différents paramètres fonctionnels, liés au fonctionnement matériel du dispositif qui réalise le calcul de la distance *d*:

- la période $T_{éch}$ de l'horloge d'échantillonnage des signaux qui détermine, de manière connue, la fréquence maximale du spectre du signal échantillonnable sans repliement: $F_{max} = {}^1/_{2 \cdot T_{éch}}$;
- le nombre de points *N* sur lequel est calculée la décomposition spectrale par FFT. Ce nombre de points détermine la résolution en fréquence $r_{f0}$ du spectre du signal $E_0(t)$ ou $E_1(t)$ considéré.

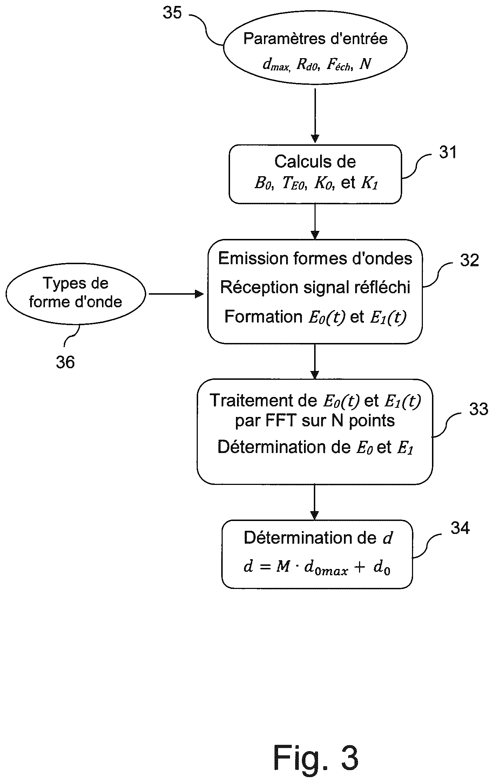

Comme l'illustre le synoptique de la figure 3, le procédé selon l'invention comporte principalement quatre étapes.

Au cours d'une première étape 31, le procédé selon l'invention exploite les paramètres cités précédemment pour déterminer, les valeurs des pentes $K_0$ et $K_1$ et les bandes $B_0$ et $B_1$ correspondant aux variations de fréquence des signaux $E_0(t)$ et $E_1(t)$ présentant les caractéristiques souhaitées.

Pour ce faire il exécute en particulier les opérations suivantes:

1) Calcul de la bande $B_0$ du signal $E_0(t)$.

De manière connue, $B_0$ est déterminé en fonction de la résolution distance souhaitée par la relation:

$$B_0 = \frac{c}{2 \cdot R_{D0}} \qquad\qquad [13]$$

2) Calcul de la durée $T_{E0}$ du signal $E_0(t)$. $T_{E0}$ est donné par:

$$T_{E0} = N \cdot T_{éch} \qquad\qquad [14]$$

3) Calcul de la pente $K_0$:

$$K_0 = \frac{B_0}{T_{E0}} \qquad\qquad [15]$$

4) Calcul de la distance maximal mesurable sans ambiguïté $d_{0max}$ et du retard $\tau_{0max}$ correspondant. $\tau_{0max}$ et $d_{0max}$ sont respectivement donné par les relations suivantes:

$$\tau_{0max} = \frac{F_{max}}{2K_0} \quad \text{avec} \quad F_{max} = \frac{1}{2 \cdot T_{éch}} \qquad\qquad [16]$$

et

$$d_{0max} = \frac{c \cdot F_{éch}}{4K_0} \qquad\qquad [17]$$

5) Calcul de la pente $K_1$.

La pente $K_1$ est déterminée en tenant compte de la distance maximale à mesurer $d_{max}$ et la fréquence maximale du signal $E(t)$, compte tenu de la fréquence d'échantillonnage $F_{éch}$. Elle a pour expression:

$$K_1 = \frac{F_{éch}}{4 \cdot \tau_{max}} = \frac{c \cdot F_{éch}}{8 \cdot d_{max}} \qquad\qquad [18]$$

Il est à noter que $K_1$ étant déterminé, on détermine préférentiellement la forme du signal $E_1(t)$ en jouant sur la bande $B_1$.

Puis au cours d'une deuxième étape 32 du procédé selon l'invention, le radar procède à l'émission de formes d'ondes permettant d'obtenir les signaux $E_0(t)$ et $E_1(t)$ et procède à la réception des signaux réfléchis correspondants pour former ces signaux $E_0(t)$ et $E_1(t)$.

Comme cela est décrit plus loin dans la présente description, les formes d'ondes émises peuvent être de différents types choisis par ailleurs. Elles ont cependant pour caractéristique commune de permettre à partir des signaux réfléchis reçus par le radar de former les signaux $E_0(t)$ et $E_1(t)$. Le type de forme d'onde à implémenter constitue à ce titre un paramètre de fonctionnement pris en compte au cours de cette deuxième étape.

Les valeurs de $K_0$, $K_1$, $B_0$ et $B_1$ étant ainsi déterminées à l'étape 31, il est avantageusement possible de déterminer, selon le type de rampes de fréquence envisagé, les caractéristiques des rampes de fréquences à émettre pour obtenir les signaux $E_0(t)$ et $E_1(t)$.

La troisième étape 33 du procédé selon l'invention implémente le traitement en fréquence des signaux $E_0(t)$ et $E_1(t)$ de façon à déterminer les composantes des spectres des signaux $E_0(t)$ et $E_1(t)$ échantillonnés à la fréquence $F_{éch}$.

Il est à noter ici que, du fait des valeurs des paramètres de fonctionnement pris en compte par le procédé selon l'invention, pour une distance maximale instrumentée $d_{max}$ donnée, le spectre de $E_1(t)$ est constitué d'une seule raie $E_1$, tandis que le spectre de $E_0(t)$ est constitué par un peigne de raies de période $F_{éch}$, dont la raie $F_0$ de fréquence la plus basse est comprise entre 0 et $\frac{F_{éch}}{2}$.

La quatrième étape 34 du procédé selon l'invention consiste, quant à elle, en la détermination à partir des spectres des signaux $E_0(t)$ et $E_1(t)$ échantillonnés, à déterminer une mesure de la distance $d$.

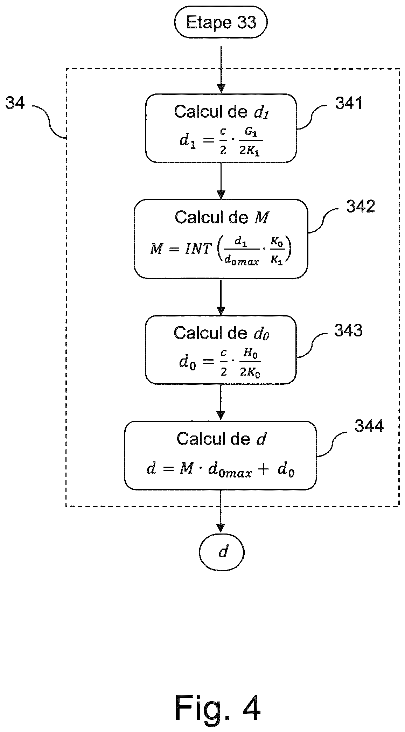

Pour ce faire, comme illustré par la figure 4, l'étape 34 du procédé selon l'invention met elle-même en œuvre différentes sous-étapes.

L'étape 34 comporte ainsi une première sous-étape 341 durant laquelle on utilise le signal $E_1(t)$ pour calculer la distance $d_1$ qui correspond à la distance $d$ mesurée à partir du signal $E_1(t)$. La distance $d_1$ est donnée par la relation suivante:

$$d_1 = \frac{c}{2} \cdot \frac{G_1}{\alpha K_1} \qquad\qquad [19]$$

$G_1$ représente la partie entière du spectre de *E1(t)*, défini en fonction du retard $\tau$ par la relation:

$$E_1 = \alpha \cdot K_1 \cdot \tau \qquad\qquad [20]$$

La résolution distance de $E_1$ étant égale à $r_{d1} = \frac{c}{2B_1}$ , $G_1$, représente ici la valeur de la composante fréquentielle de $E_1$, qui peut s'écrire, en fonction de la résolution fréquentielle $r_{F0}$ :

$$G_1 = INT\left(\frac{E_1}{r_{F0}}\right) \cdot r_{F0} \qquad\qquad [21]$$

Il est à noter que la distance $d_1$ donne avantageusement une mesure de la distance d valable sur toute la plage de distance s'étendant jusqu'à la valeur $d_{max}$. Cependant cette mesure de distance est obtenue avec une résolution $r_{d1}$ plus faible que la résolution distance $r_{d0}$ recherchée.

L'étape 34 comporte également une deuxième sous-étape 342, durant laquelle le procédé selon l'invention calcule le facteur *M* défini par la relation:

$$M = INT\left(\frac{E_1}{F_{max}}\right) = INT\left(\frac{2E_1}{F_{éch}}\right) = INT(2 \cdot E_1 \cdot T_{éch}) = INT\left(\frac{d_1}{d_{0max}} \cdot \frac{K_0}{K_1}\right) \qquad [22]$$

où *INT* représente la fonction "partie entière"

L'étape 34 comporte encore une troisième sous-étape 343, durant laquelle le procédé selon l'invention détermine, à partir du signal $E_0(t)$, la distance $d_0$ donnée par la relation suivante:

$$d_0 = \frac{c}{2} \cdot \frac{H_0}{\alpha K_0}; \qquad\qquad [23]$$

$H_0$ représente la partie entière de la valeur de la première raie spectrale, $E_0$, du spectre de *E0(t)*, défini en fonction du retard $\tau$ par la relation:

$$E_0 = \alpha \cdot K_0 \cdot \tau \qquad\qquad [24]$$

de sorte que l'on peut écrire:

$$H_0 = INT\left(\frac{E_0}{r_{F0}}\right) \cdot r_{F0} \qquad\qquad [25]$$

L'étape 34 comporte enfin une quatrième sous-étape 344, durant laquelle le procédé selon l'invention calcule la valeur de la distance d mesurée, *d* étant donné par la relation:

$$d = M \cdot d_{0max} + d_0 \qquad\qquad [26]$$

Comme cela a été mentionné précédemment, les formes d'ondes émises durant l'étape 32 peuvent être de différents types choisis par ailleurs. Elles ont cependant pour caractéristique commune de permettre de former des signaux $E_0(t)$ et $E_1(t)$ définis par leurs bandes respectives $B_0$ et $B_1$ et leurs pentes de variation en fréquence respectives $K_0$ et $K_1$. Le type de forme d'onde à implémenter constitue à ce titre un paramètre de fonctionnement pris en compte au cours de cette deuxième étape.

Il est à noter que les paramètres fonctionnels principaux, qui déterminent les bandes $B_0$ et $B_1$ ainsi que les pentes $K_0$ et $K_1$ sont:

- des paramètres fonctionnels:

  - la résolution distance : $R_{d0}$;
  - la distance maximum à mesurer : $d_{1\,max}$;

- des paramètres liés à la structure matérielle destinée à mettre en œuvre le procédé selon l'invention:

  - la période d'échantillonnage des signaux, $T_{éch}$, qui fixe la fréquence maximale des signaux échantillonnés:

$$F_{max} = \frac{1}{2.T_{éch}} \; ;$$

  - le nombre $N$ de points sur lesquels la FFT est appliquée aux signaux $E_0(t)$ et $E_1(t)$. Ce nombre $N$ détermine la résolution fréquentielle $R_{f0}$ du spectre formé après FFT.

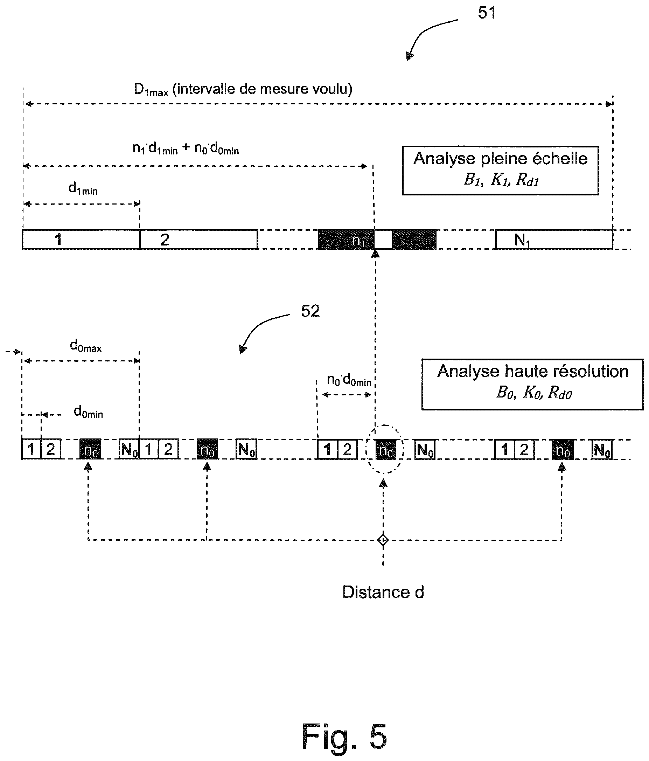

L'illustration de la figure 5, permet de représenter d'un point de vue formel le principe de fonctionnement du procédé selon l'invention, qui peut être considérée comme une analyse du spectre du signal $E_1(t)$ décrit précédemment en considérant deux références de fréquence (i.e. deux références de distance) distinctes 51 et 52, superposées, multiples l'une de l'autre, ces deux références étant liées aux valeurs respectives des bandes passantes $B_0$ et $B_1$ et des pentes $K_0$ et $K_1$ respectives des formes d'ondes émises .

La référence 51 avec le pas le plus grand, un pas $P_1 \left( P_1 = R_{d1} = \frac{c}{2.B_1} = \frac{c}{2.K_1} T_E \right)$, permet de mesurer, avec une résolution en fréquence correspondant à la résolution en distance $R_{d1}$, toutefois insuffisante, la fréquence $E$ du spectre du signal échantillonné $E(t)^*$ qui correspond effectivement à la fréquence du signal réel $E(t)$ et donc à la distance d vraie; la fréquence $E$ mesurée étant située dans un intervalle de fréquences donné de largeur égale au pas $P1$.

L'échelle 52 avec le pas le plus faible, un pas $P2$, permet de localiser la fréquence $E$ dans un intervalle de fréquence restreint, correspondant à la résolution en distance $R_{d0}$ voulue, à l'intérieur de l'intervalle de fréquence de largeur $P1$ incluant la fréquence $E$.

Sur l'illustration de la figure 5 on a fait figurer directement les échelles de distance correspondant aux échelles de fréquence.

Dans la suite du document on propose à titre d'exemple deux exemples de formes d'ondes pouvant être utilisées pour la mise en œuvre du procédé selon l'invention.

Il est à noter que le choix des formes d'ondes à émettre, choix réalisé en tenant compte des paramètres fonctionnels mentionnés précédemment, affecte uniquement l'exécution de la deuxième étape 32 du procédé selon l'invention. Par suite les éléments de description relatifs aux exemples de mise en œuvre du procédé selon l'invention, portent principalement sur la deuxième étape 32 du procédé selon l'invention.

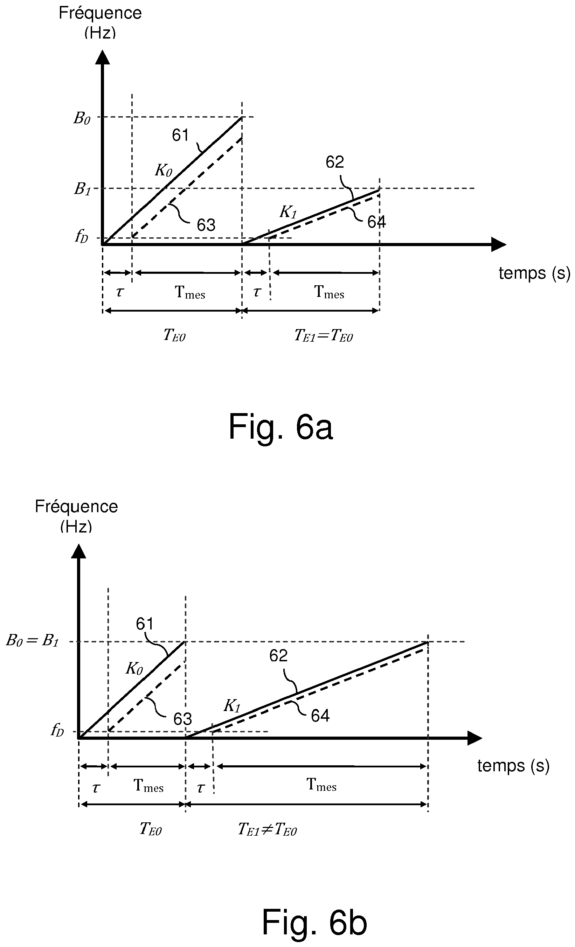

Selon la première forme de mise en œuvre présentée ici, illustré par la figure 6a, les formes d'ondes émises sont constituées par deux rampes de fréquence distinctes 61 et 62, présentant des pentes de variation respectivement égales à $K_0$ et $K_1$, *la pente $K_0$ étant supérieure à la pente $K_1$*. La première rampe 31 est une rampe de durées $T_{E0}$, dont la bande passante prend une valeur $B_0$ tandis que la seconde rampe 62 est une rampe de durées $T_{E1}$, égale à $T_{E0}$, dont la bande passante prend une valeur $B_1$. On peut donc écrire:

$$K_0 = \frac{B_0}{T_{E0}}$$

et

$$K_1 = \frac{B_1}{T_{E0}}$$

Dans ce premier exemple de mise en œuvre les deux rampes de fréquence 61 et 62 sont émises successivement par le radar au cours de l'étape 62, de sorte que les signaux $E_0(t)$ et $E_1(t)$ sont respectivement formés directement en réalisant la démodulation par la rampe de fréquence 61, du signal réfléchi 63 reçu par le radar après émission de cette première rampe de fréquence et la démodulation par la rampe de fréquence 62, du signal réfléchi 64 reçu par le radar après émission de cette seconde rampe de fréquence, puis en filtrant le signal produit pour ne conserver que le signal

$$\text{E}(t) = \frac{r(t)}{e(t)} = e^{i.2.\Pi(-K\tau+f_D)t}$$

. On obtient ainsi les signaux:

$$E_0(t) = \frac{r_0(t)}{e_0(t)} = e^{i.2.\Pi(-K_0\tau+f_D)t} \qquad [27]$$

et

$$E_1(t) = \frac{r_1(t)}{e_1(t)} = e^{i.2.\Pi(-K_1\tau+f_D)t} \qquad [28]$$

Les signaux $E_0(t)$ et $E_1(t)$ étant ainsi obtenu à partir des deux rampes 61 et 62, le procédé selon l'invention se déroule de la façon décrite précédemment.

Dans la forme de mise en œuvre décrite précédemment, on considère que les deux rampes de fréquence 61 et 62 émises ont une même durée $T_{E0}$, de sorte que les pentes $K_0$ et $K_1$ sont obtenues en jouant sur les bandes passantes respectives $B_0$ et $B_1$ des deux rampes. On traite ainsi des signaux présentant deux résolutions distances distinctes $R_{d0}$ et $R_{d1}$ dont $R_{d0}$ représente la résolution distance recherchée pour le calcul de la distance $d$.

Cependant il est à noter que, dans une autre forme de mise en œuvre du procédé selon l'invention, illustré par la figure 6b, il est possible de considérer deux rampes de fréquence 61 et 62 émises avec des durées $T_{E0}$ et $T_{E1}$ distinctes, sur une même bande $B$ ($B_0 = B_1 = B$), de sorte que les pentes $K_0$ et $K_1$ sont déterminée en jouant sur les valeurs respectives de $T_{E0}$ et $T_{E1}$.

Dans ce cas, le traitement est réalisé en appliquant une FFT sur $N_0$ points au signal $E_0^*(t)$ et sur $N_1$ points au signal $E_1^*(t)$ ce qui permet d'ajuster $T_{E0} = N_0.T_{\text{éch}}$ et $T_{E1} = N_1.T_{\text{éch}}$ de façon à ce que $T_{E1}$ soit multiple de $T_{E0}$. On traite ainsi des signaux en considérant deux résolutions fréquentielles distinctes $R_{f0} = \frac{1}{T_{E0}}$ et $R_{f1} = \frac{1}{T_{E1}}$.

Il est à noter ici que le pas $P1$ est alors défini par la résolution fréquentielle $R_{f1}$ car la résolution distance est constante puisqu'il y a émission d'une bande de fréquence identique $B\left(r_D = \frac{c}{2.B}\right)$.

Cette forme de mise en œuvre, semblable dans son principe à la forme décrite précédemment permet d'obtenir plus rapidement la valeur de la distance dans la résolution la moins fine.

On peut également, de manière généralisée, dans une forme de mise en œuvre analogue au formes précédente, envisager de procéder à l'émission de deux rampes de fréquence 61 et 62 présentant des durées $T_{E0}$ et $T_{E1}$ distinctes et des bandes $B_0$ et $B_1$ distinctes également. On peut ainsi ajuster les valeurs des pentes $K_0$ et $K_1$ en jouant indistinctement sur les valeurs respectives de $T_{E0}$ et $T_{E1}$ et/ou sur les valeurs respectives de $B_0$ et $B_1$.

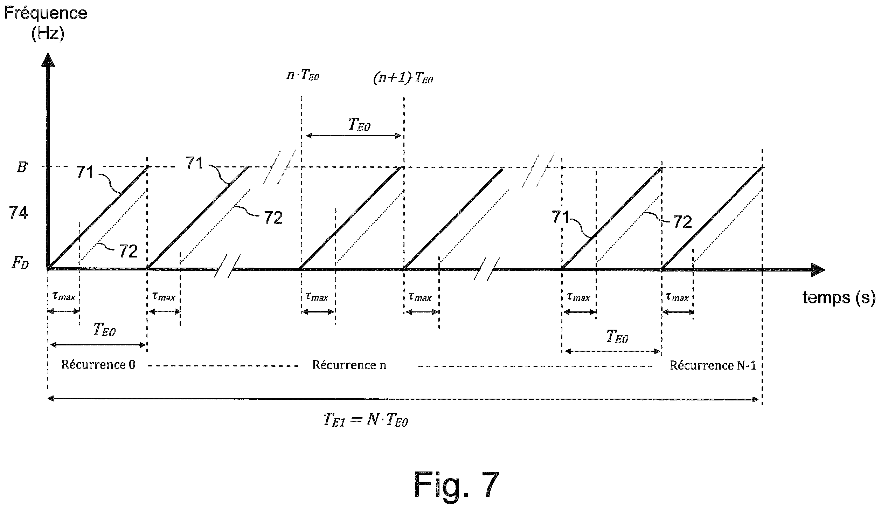

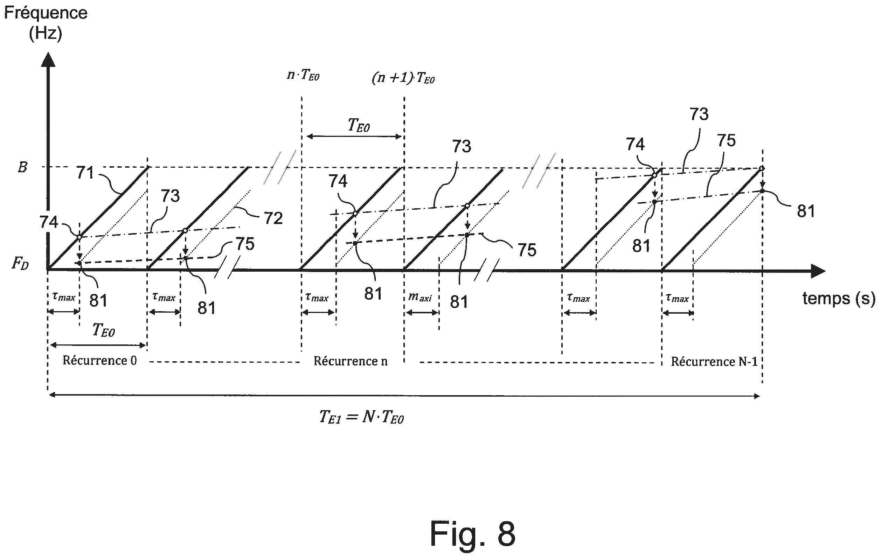

Les figures 7 et 8 illustrent le principe de fonctionnement d'une seconde forme de mise en œuvre du procédé selon l'invention.

Cette forme de mise en œuvre consiste à émettre de manière récurrente, avec une période $T_0$, une série de $N$ rampes de fréquences élémentaires identiques 71 de pente $K_0$ et de durée $T_{E0}$, l'ensemble des rampes émises constituant un signal de durée $N\,T_{E0}$.

Elle consiste ensuite à effectuer une double analyse spectrale par FFT sur $N$ points :

- une première analyse spectrale sur $N$ ppoints est réalisée sur le signal $E_0^*(t)$ obtenu après échantillonnage de $E_0(t)$ déterminé à partir du signal reçu $ro(t)$, 73, après émission d'une rampe élémentaire $e_0(t)$, 71, de durée $T_{E0}$;

- une seconde analyse spectrale est réalisée sur un signal $E_1^*(t)$ constitué de $N$ échantillons, chaque échantillon $E_1(t_n)$ correspondant, pour un instant donné $t_n$, à la valeur du signal $E_0(t)$ déterminé à partir du signal $r_0(t)$ reçu pour la rampe de fréquence élémentaire, 71, émise à la nième récurrence. La seconde analyse spectrale est ainsi réalisée sur un signal $E_1^*(t)$ déterminé à partir d'un signal $r_1(t)$, de durée $NT_{E0}$, constitué des $N$ échantillons 81 retenus.

Selon l'invention, les N instants $t_n$ sont choisis de façon à ce que pour la récurrence $n$, $n$ variant de 0 (première récurrence) à $N-1$ (Nième récurrence), l'instant $t_n$ ait pour expression :

$$t_n = n \cdot T_{E0} + n \cdot \frac{T_{E0}}{N} \qquad\qquad [29]$$

Par suite, les $N$ points 81 constituant les échantillons du signal $r_1(t)$, ayant chacun pour abscisse un instant $t_n$ dans une représentation temps-fréquence, correspondent à N point alignés sur une droite de pente $K_1$ inférieur à la pente $K_0$ caractérisant les rampes élémentaires 71, $K_1$ ayant pour expression :

$$K_1 = \frac{K_0}{N} \qquad\qquad [30]$$

De la sorte on synthétise de manière virtuelle un signal d'émission 73 de durée $N \cdot T_{E0}$ ayant la forme d'une rampe de fréquence $e_1(t)$ de pente $K_1$.

Avantageusement le signal de réception correspondant, $r_1(t)$, 75, est alors défini par $N$ échantillons 81 des signaux $r_0(t)$, 72, correspondant à la valeur du signal reçu à chaque instant $t_n$ consécutivement à l'émission de la rampe de fréquence 71 de pente $K_0$ de la n$^{\text{ième}}$ récurrence.

Cette seconde forme de mise en œuvre permet ainsi, en émettant un seul type de rampes de fréquence de pente $K_0$, de disposer comme dans le cas de la forme de mise en œuvre précédente, de deux signaux $E_0$ et $E_1$, en mettant en œuvre le traitement par double analyse spectrale de $E_0^*(t)$ et $E_1^*(t)$ implémenté par le procédé selon l'invention. Cependant, la formation du signal $E_1(t)$ réalisée au cours de l'étape 32 apparait différente.

Ainsi, pour former le signal $E_1^*(t)$, on réalise un cumul d'échantillons sur N récurrences correspondant aux $N$ rampes élémentaires 71 émises.

Il est cependant à noter que le cumul des échantillons sur $N$ récurrences doit se faire avec une compensation de retard proportionnelle au rang de la récurrence.

En effet si l'on considère le signal $e_0(t,n)$ du signal correspondant à une rampe élémentaire 71 de rang $n$ ($n$ variant de 0 à $N-1$) on constate que cette rampe élémentaire est définie pour $t \in [0 + \tau_{max} \,;\, T_{E1}]$ par:

$$e_0(t,n) = e^{i.2.\pi.K_0.(t-\, n.T_{E0}-\tau_{max}).t} \qquad\qquad [31]$$

Par suite, pour effectuer le cumul des échantillons des signaux $E_0(t)$ sur $N$ récurrences, Il est nécessaire de créer une réplique de l'onde émise $e_r(t,n)$ et de rajouter, à chaque récurrence, une phase égale à $n \cdot \dfrac{2.\pi}{N}$ pour l'appliquer sur l'OL (Oscillateur Locale) de réception du récepteur radar, de façon à pouvoir former un signal de mesure dont la période est $> T_{E0}$. Ainsi, après déphasage de l'OL, on obtient $e_r(t,n)$ et $r_0(t,n)$ donnés par les relations suivantes:

$$e_r(t,n) = e^{i.2.\pi..K_0.(t-\, n.T_{E0}-\tau_{max}).t+n.\frac{2.\pi}{N}} \qquad\qquad [32]$$

$$r_0(t,n) = e^{i.2.\pi..K_0.(t-\, n.T_{E0}-\tau_{max}-\tau).t} \qquad\qquad [33]$$

Le signal $E_1^*(t)$ est ainsi défini, pour $t \in [0 + \tau_{max}, T_{E1}]$, par l'expression suivante:

$$E_1^*(t) = \frac{e_r(t,n)}{r_0(t,n)} = e^{i.2.\Pi(K\tau t+\frac{n}{N})} \qquad\qquad [34]$$

Il est à noter ici, que de manière avantageuse les échantillons des signaux $E_0^*(t)$ cumulés sur les *N* récurrences sont prélevés en des instants particuliers spécifiques pour chacune des récurrences. Ainsi, pour la nième récurrence on prélève l'échantillon correspondant à l'instant $t_n$ défini par la relation: $t_n = n \cdot T_{E0}\left(\frac{N+1}{N}\right)$ .

On peut constater aisément que, si les échantillons des signaux $E_0^*(t)$ cumulés sur les *N* récurrences sont prélevés en des instants identiques $t_n = N.T_{E0}$ pour chaque récurrence, le signal $E_1^*(t)$ est alors défini, pour $t \in [0 + \tau_{max}, T_{E1}]$, par l'expression suivante:

$$E_1^*(t) = \frac{e_r(t_n, n)}{r_0(t_n, n)} = e^{i.2.\Pi.n(K.\tau.T_{E0.} + \frac{1}{N})} \qquad [35]$$

Par suite, dans le cas où la période $T_{E0} \cdot \frac{N+1}{N}$ est inférieure à $\frac{1}{K.\tau}$ , on peut écrire

$$E_1^*(t) = \frac{e_r(t_n, n)}{r_0(t_n, n)} = e^{i.2.\Pi.n(\gamma + \frac{1}{N})} \qquad [36]$$

avec $\gamma = K \cdot \tau \cdot T_{E0}$. $E_1^*(t)$ apparait donc comme un signal de fréquence $F = \gamma + \frac{1}{N}$ et l'on peut écrire, pour $\frac{1}{K.\tau} < T_{E0}$ :

$$F_{max} = \frac{1}{2 \cdot T_{E0}} \quad \text{et} \quad F_{min} = \frac{1}{N \cdot T_{E0}} \qquad [37]$$

En revanche si les échantillons des signaux $E_0^*(t)$ cumulés sur les *N* récurrences sont prélevés comme indiqué précédemment, pour des instant $t_n$ distincts, on peut écrire

$$E_1^*(t) = \frac{e_r(t, n)}{r_0(t, n)} = e^{i.2.\Pi n(\gamma + \frac{1}{N})} \qquad [38]$$

avec

$$\gamma = K \cdot \tau \cdot T_{E0} \cdot \left(\frac{N+1}{N}\right)$$

Le signal $E_1^*(t)$ étant défini sur *N* ppoints espacés de $\frac{N+1}{N} \cdot T_{E0}$ , on constate L'existence d'un facteur d'échelle égal à $\frac{N}{N+1}$ sur la quantification de fréquence *F* du signal qui est dans ce cas défini, pour $\frac{1}{K.\tau} < T_{E0}.\left(\frac{N+1}{N}\right)$ , par la relation:

$$F = \left(\frac{1}{\gamma} + \frac{1}{N}\right) \cdot \frac{N}{N+1} \qquad [39]$$

F$_{min}$ et F$_{max}$ étant alors définis par:

$$F_{min} = \frac{1}{(N+1)\cdot T_{E0}} \quad \text{et} \quad F_{max} = \frac{N}{2\cdot(N+1)\cdot T_{E0}} \qquad [40]$$

On constate ainsi que le principe de collecte d'échantillons mis en œuvre dans le contexte de l'invention permet avantageusement d'augmenter la résolution en fréquence, sans changer les paramètres de la forme d'onde utilisée.

**Revendications**

1. Procédé pour déterminer en temps réel la distance, d, au sol d'un aéronef par mesures radar, ladite distance d étant déterminée, pour une plage de distances s'étendant jusqu'à une distance $d_{max}$ donnée, avec une résolution constante $R_{d0}$ donnée ;

   mettant en œuvre les opérations suivantes :

   - l'émission d'au moins deux rampes de fréquence successives et la réception des signaux réfléchis par le sol consécutivement à ces émissions ;
   - la constitution, à partir des signaux réfléchis reçus de deux signaux $Eo(t)$ et $E_1(t)$ correspondant chacun au signal réfléchi $r_0(t)$ ou $r_1(t)$ provenant des émissions successives de deux formes d'ondes $e_0(t)$ et $e_1(t)$, après démodulation des signaux $r_0(t)$ et $r_1(t)$ par l'onde correspondante $e_0(t)$ ou $e_1(t)$ et échantillonnage du signal démodulé à une fréquence donnée $F_{éch}$, ledit procédé étant **caractérisé en ce que** :

   lesdites formes d'ondes $e_0(t)$ et $e_1(t)$ étant représentées dans un espace «temps-fréquence» par deux rampes de fréquence présentant des pentes de variation respectives $K_0$ et $K_1$, sur deux bandes de fréquence $B_0$ et $B_1$ dont le rapport $B_1/B_0$ est un nombre entier donnée, la bande $B_0$ étant déterminée en fonction de la résolution distance $R_{d0}$ par la relation:

   $$B_0 = {}^{c}\!/2\mathrm{R}_{d0},$$

   la pente $K_1$ étant déterminée en fonction de la distance $d_{max}$ par la relation:

   $$K_1 = \frac{c}{2} \cdot \frac{F_{éch}}{2\alpha\cdot d_{1max}};$$

   les pentes $K_0$ et $K_1$ étant respectivement données par les relations

   $$K_0 = {}^{B_0}\!/T_{E0} \text{ et } K_1 = {}^{B_1}\!/T_{E1}$$

   Où $T_{E0}$ et $T_{E1}$ représentent les durées d'émission respectives des formes d'ondes $e_0(t)$ et $e_1(t)$, et qu'il comporte les opérations suivantes :

   - l'application d'une FFT, sur $N$ échantillons, sur les signaux $E_0(t)$ et $E_1(t)$ et détermination des composantes spectrales $E_0$ et $E_1$ correspondant auxdits signaux, $E_0$ correspondant à la composante de plus basse fréquence du spectre de $E_0(t)$;
   - la détermination, à partir des composantes spectrales $E_0$ et $E_1$, des distances mesurées $d_0$ et $d_1$ au moyen des formes d'ondes $e_0(t)$ et $e_1(t)$ correspondant respectivement aux composantes spectrales $E_0$ et $E_1$, $d_0$ et $d_1$ étant donnés par les relations :

   $$d_0 = \frac{c}{2} \cdot \frac{E_0}{\alpha K_0}$$

   et

$$d_1 = \frac{c}{2} \cdot \frac{E_1}{\alpha K_1}$$

- la détermination, à partir de $d_0$ et $d_1$, de la distance d à mesurer, d étant donnée par la relation :

$$d = M \cdot d_{0max} + d_0$$

avec

$$d_{0max} = \frac{c}{2} \cdot \frac{F_{0max}}{\alpha K_0} = \frac{c}{2} \cdot \frac{F_{éch}}{2\alpha K_0}$$

et

$$M = INT\left(\frac{d_1}{d_{0max}}\right) = INT(2 \cdot E_1 \cdot T_{éch}).$$

**2.** Procédé selon la revendication 1, **caractérisé en ce qu'**il comporte les étapes suivantes:

- une première étape (31) durant laquelle on détermine les pentes $K_0$ et $K_1$, et des bandes de fréquence $B_0$ et $B_1$ caractérisant les deux signaux $e_0(t)$ et $e_1(t)$ ainsi que les durées d'émission $T_{E0}$ et $T_{E1}$ de ces deux signaux; cette première étape étant réalisée en prenant en compte les paramètres (35) suivants:

- distance maximale mesurée: $d_{max}$,
- résolution distance demandée: $R_{d0}$,
- fréquence d'échantillonnage des signaux reçus par le radar: $F_{éch}$,
- nombre $N$ de points sur lesquels la décomposition spectrale des signaux doit être effectuée;

- Une deuxième étape (32) d'émission durant laquelle:

- le radar émet au moins deux ondes correspondant à un type d'émission choisi (36), au moins une de ces ondes consistant en une rampe de fréquence de bande $B_0$ et de pente $K_0$;
- le radar reçoit les signaux réfléchis résultant de la réflexion par le sol des ondes émises;
- On forme les signaux $E_0(t)$ et $E_1(t)$ à partir des signaux réfléchis reçus;

- une troisième étape (33) durant laquelle on réalise la décomposition spectrale par FFT sur $N$ points des signaux $E_0(t)$ et $E_1(t)$ et la détermination des composantes spectrales $E_0$ et $E_1$;
- une quatrième étape (34) durant laquelle on réalise le calcul de la distance d à partir de $E_0$ et $E_1$.

**3.** Procédé selon la revendication 2, **caractérisé en ce que** la quatrième étape 34 comporte:

- une première sous-étape (341) de calcul de la distance $d_1$ définie par: $d_1 = \frac{c}{2} \cdot \frac{G_1}{\alpha K_1}$ où $G_1$ représente la partie entière du spectre de $E1(t)$

- une deuxième sous-étape (342) de calcul du facteur d'échelle $M$ défini par: $M = INT\left(\frac{2E_1}{F_{éch}}\right)$ ;

- une troisième sous-étape (343) de calcul de la distance $d_0$ définie par: $d_0 = \frac{c}{2} \cdot \frac{H_0}{\alpha K_0}$ où $H_0$ représente la partie entière de la valeur de la première raie spectrale, $E_0$, du spectre de $E_0(t)$;
- une quatrième sous-étape (344) de calcul de la distance $d$, définie par: $d = M \cdot d_{0max} + d_0$.

**4.** Procédé selon l'une des revendications 2 ou 3, **caractérisé en ce que** les formes d'ondes émises par le radar au cours de la deuxième étape (32) du procédé consistent en une première rampe de fréquence $e_0(t)$ (61) de bande

$B_0$ et de pente $K_0$ suivie d'une seconde rampe de fréquence $e_1(t)$ (62) de bande $B_1$ et de pente $K_1$.

5. Procédé selon la revendication 4, **caractérisé en ce que** le signal $e_0(t)$ et le signal $e_1(t)$ ont des durées d'émission respective $T_{E0}$ et $T_{E1}$ distinctes et occupent une même bande de fréquence $B$, de sorte que leurs pentes respectives $K_0$ et $K_1$, ont pour expression:

$$K_0 = \frac{B}{T_{E0}} \text{ et } K_1 = \frac{B}{T_{E1}}.$$

6. Procédé selon l'une des revendications 4 ou 5, **caractérisé en ce que** les signaux $E_0(t)$ et sont obtenus après démodulation des signaux reçus $r_0(t)$ et $r_1(t)$ par les signaux émis $e_0(t)$ (61) et $e_1(t)$ (62), les signaux $E_0(t)$ et $E_1(t)$ étant ensuite échantillonnés au cours de la troisième étape (33) à la fréquence $F_{éch}$ pour obtenir les signaux $E_0^*(t)$ et $E_1^*(t)$, dont on réalise l'analyse spectrale par FFT.

7. Procédé selon l'une des revendications 2 ou 3, **caractérisé en ce que** les formes d'ondes émises par le radar au cours de la deuxième étape (32) du procédé consistent en une suite récurrente de $N$ rampes de fréquence identiques $e_0(t-nT_{E0})$ (71), décalées dans le temps les unes des autres d'une durée $T_{E0}$ égale au temps d'émission d'une rampe, de bande $B$ et de durée $T_{E0}$.

8. Procédé selon la revendication 7, **caractérisé en ce que** pour chacune des $N$ rampes de fréquence émises (71), on échantillonne le signal $E_0(t)$ obtenu par démodulation du signal reçus par le signal émis pour obtenir le signal $E_0^*(t)$ correspondant, puis on construit un signal $E_1^*(t)$ en considérant un échantillon du signal $E_0^*(t)$ formé pour chacune des $N$ rampes émise, le signal $E_1^*(t)$ étant constitué des $N$ échantillons ainsi prélevés.

9. Procédé selon la revendication 8, **caractérisé en ce que** pour la nième rampe de fréquence $e_0(t)$ émise on démodule le signal reçu $r_0(t)$ en appliquant un déphasage égal à $n \cdot \frac{2.\pi}{N}$ sur l'oscillateur locale du récepteur radar.

10. Procédé selon l'une des revendications 8 ou 9, **caractérisé en ce que**, pour chacun des $N$ signaux $E_0^*(t)$ formés, on prélève l'échantillon correspondant à l'instant $t_n$ déterminé par l'expression :

$$t_n = n \cdot T_{E0} + n \cdot \frac{T_{E0}}{N} \, ,$$

dans laquelle $n$ représente le rang, dans la suite de rampes de fréquence émises, de la rampe de fréquence $n$ correspondant au signal $E_0^*(t)$ considéré.

**Patentansprüche**

1. Verfahren zum Echtzeitbestimmen der Entfernung d eines Luftfahrzeugs vom Boden durch Radarmessungen, wobei die Entfernung d für einen Entfernungsbereich bis zu einer gegebenen Entfernung $d_{max}$ mit einer gegebenen konstanten Auflösung $R_{d0}$ bestimmt wird;

wobei die folgenden Operationen durchgeführt werden:

- Aussenden von mindestens zwei aufeinanderfolgenden Frequenzrampen und Empfangen der vom Boden reflektierten Signale, die auf diese Aussendungen folgen;
- Bilden, auf der Basis der empfangenen reflektierten Signale, von zwei Signalen $E_0(t)$ und $E_1(t)$, die jeweils dem reflektierten Signal $r_0(t)$ bzw. $r_1(t)$ entsprechen, das aus aufeinanderfolgenden Aussendungen zweier Wellenformen $e_0(t)$ und $e_1(t)$ stammt, nach einer Demodulation der Signale $r_0(t)$ und $r_1(t)$ durch die ent-

sprechende Welle $e_0(t)$ bzw. $e_1(t)$, und Abtasten des demodulierten Signals bei einer gegebenen Frequenz $F_{ech}$, wobei das Verfahren **dadurch gekennzeichnet ist, dass**:

die Wellenformen $e_0(t)$ und $e_1(t)$ in einem "Zeit-Frequenz"-Raum durch zwei Frequenzrampen dargestellt werden, die jeweilige Änderungssteigungen $K_0$ und $K_1$ auf zwei Frequenzbändern $B_0$ und $B_1$ aufweisen, deren Verhältnis $B_1/B_0$ eine gegebene ganze Zahl ist, wobei das Band $B_0$ in Abhängigkeit von der Entfernungsauflösung $R_{d0}$ durch die folgende Beziehung bestimmt wird:

$$B_0 = {}^c\!/2R_{d0},$$

wobei die Steigung $K_1$ in Abhängigkeit von der Entfernung $d_{max}$ durch die folgende Beziehung bestimmt wird:

$$K_1 = \frac{c}{2} \cdot \frac{F_{ech}}{2\alpha \cdot d_{1max}};$$

wobei die Steigungen $K_0$ und $K_1$ jeweils durch die Beziehungen:
$K_0 = {}^{B_0}\!/_{T_{E0}}$ und $K_1 = {}^{B_1}\!/_{T_{E1}}$ gegeben sind,
wobei $T_{E0}$ und $T_{E1}$ die jeweiligen Aussendedauern der Wellenformen $e_0(t)$ und $e_1(t)$ darstellen, und dadurch, dass es die folgenden Operationen umfasst:

- Anwenden einer FFT, über $N$ Samples, auf die Signale $E_0(t)$ und $E_1(t)$ und Bestimmen der Spektralkomponenten $E_0$ und $E_1$ entsprechend den Signalen, wobei $E_0$ der niederfrequentesten Komponente des Spektrums von $E_0(t)$ entspricht;
- Bestimmen, auf der Basis der Spektralkomponenten $E_0$ und $E_1$, der gemessenen Entfernungen $d_0$ und $d_1$ mittels der Wellenformen $e_0(t)$ und $e_1(t)$, die jeweils den Spektralkomponenten $E_0$ und $E_1$ entsprechen,

$$d_0 = \frac{c}{2} \cdot \frac{E_0}{\alpha K_0} \quad \text{und} \quad d_1 = \frac{c}{2} \cdot \frac{E_1}{\alpha K_1}$$

wobei $d_0$ und $d_1$ durch die Beziehungen: gegeben sind,
- Bestimmen, auf der Basis von $d_0$ und $d_1$, der zu messenden Entfernung d, wobei d durch die folgende Beziehung gegeben ist:

$$d = M \cdot d_{0max} + d_0$$
$$\text{mit } d_{0max} = \frac{c}{2} \cdot \frac{F_{0max}}{\alpha K_0} = \frac{c}{2} \cdot \frac{F_{ech}}{2\alpha K_0}$$

und

$$M = INT\left(\frac{d_1}{d_{0max}}\right) = INT(2 \cdot E_1 \cdot T_{ech}).$$

2. Verfahren nach Anspruch 1, **dadurch gekennzeichnet, dass** es die folgenden Schritte beinhaltet:

- einen ersten Schritt (31), bei dem die Steigungen $K_0$ und $K_1$ und die Frequenzbänder $B_0$ und $B_1$, die die beiden Signale $e_0(t)$ und $e_1(t)$ charakterisieren, sowie die Aussendedauern $T_{E0}$ und $T_{E1}$ dieser beiden Signale bestimmt werden; wobei dieser erste Schritt unter Berücksichtigung der folgenden Parameter (35) durchgeführt wird:
- maximale gemessene Entfernung: $d_{max}$,
- geforderte Entfernungsauflösung: $R_{d0}$,
- Abtastfrequenz der vom Radar empfangenen Signale: $F_{ech}$,
- Anzahl $N$ von Punkten, an denen die spektrale Zerlegung der Signale durchgeführt werden muss;
- einen zweiten Aussendeschritt (32), bei dem:
- das Radar mindestens zwei Wellen aussendet, die einem gewählten Aussendetyp (36) entsprechen, wobei mindestens eine dieser Wellen aus einer Frequenzrampe mit Band $B_0$ und Steigung $K_0$ besteht;

- das Radar die reflektierten Signale empfängt, die aus der Reflexion der ausgesendeten Wellen vom Boden resultieren;
- die Signale $E_0(t)$ und $E_1(t)$ auf der Basis der erhaltenen reflektierten Signale gebildet werden;

- einen dritten Schritt (33), bei dem die spektrale Zerlegung der Signale $E_0(t)$ und $E_1(t)$ durch FFT an $N$ Punkten und die Bestimmung der Spektralkomponenten $E_0$ und $E_1$ erfolgen;
- einen vierten Schritt (34), bei dem die Berechnung der Entfernung d auf der Basis von $E_0$ und $E_1$ erfolgt.

3. Verfahren nach Anspruch 2, **dadurch gekennzeichnet, dass** der vierte Schritt 34 Folgendes beinhaltet:

- einen ersten Teilschritt (341) des Berechnens der Entfernung $d_1$, definiert durch: $d_1 = \frac{c}{2} \cdot \frac{G_1}{\alpha K_1}$ , wobei $G_1$ den gesamten Teil des Spektrums von $E_1(t)$ repräsentiert;

- einen zweiten Teilschritt (342) des Berechnens des Skalenfaktors $M$, definiert durch: $M = INT\left(\frac{2E_1}{F_{éch}}\right)$ ;

- einen dritten Teilschritt (343) des Berechnens der Entfernung $d_0$, definiert durch: $d_0 = \frac{c}{2} \cdot \frac{H_0}{\alpha K_0}$ wobei $H_0$ den gesamten Teil des Wertes der ersten Spektrallinie, $E_0$, des Spektrums von $E_0(t)$ darstellt;

- einen vierten Teilschritt (344) des Berechnens der Entfernung $d$, definiert durch: $d = M \cdot d_{0max} + d_0$.

4. Verfahren nach Anspruch 2 oder 3, **dadurch gekennzeichnet, dass** die vom Radar im zweiten Schritt (32) des Verfahrens ausgesendeten Wellenformen aus einer ersten Frequenzrampe $e_0(t)$ (61) mit Band $B_0$ und Steigung $K_0$, gefolgt von einer zweiten Frequenzrampe $e_1(t)$ (62) mit Band $B_1$ und Steigung $K_1$ bestehen.

5. Verfahren nach Anspruch 4, **dadurch gekennzeichnet, dass** das Signal $e_0(t)$ und das Signal $e_1(t)$ jeweils unterschiedliche Aussendedauern $T_{E0}$ und $T_{E1}$ haben und ein gleiches Frequenzband $B$ belegen, so dass ihre jeweiligen Steigungen $K_0$ und $K_1$ wie folgt ausgedrückt werden:

$$K_0 = \frac{B}{T_{E0}}$$

und

$$K_1 = \frac{B}{T_{E1}}.$$

6. Verfahren nach Anspruch 4 oder 5, **dadurch gekennzeichnet, dass** die Signale $E_0(t)$ und $E_1(t)$ nach der Demodulation der empfangenen Signale $r_0(t)$ und $r_1(t)$ durch die ausgesendeten Signale $e_0(t)$ (61) und $e_1(t)$ (62) erhalten werden, wobei die Signale $E_0(t)$ und $E_1(t)$ dann im dritten Schritt (33) bei der Frequenz $F_{éch}$ abgetastet werden, um die Signale $E_0^*(t)$ und $E_1^*(t)$ zu erhalten, an denen die Spektralanalyse mittels FFT erfolgt.

7. Verfahren nach Anspruch 2 oder 3, **dadurch gekennzeichnet, dass** die vom Radar im zweiten Schritt (32) des Verfahrens ausgesendeten Wellenformen aus einer wiederkehrenden Folge von $N$ identischen Frequenzrampen $e_0(t-nT_{E0})$ (71) bestehen, die zeitlich um eine Dauer $T_{E0}$ gleich der Aussendezeit einer Rampe mit Band $B$ und Dauer $T_{E0}$ voneinander versetzt sind.

8. Verfahren nach Anspruch 7, **dadurch gekennzeichnet, dass** für jede der $N$ ausgesendeten Frequenzrampen (71) das Signal $E_0(t)$ abgetastet wird, das durch Demodulation des empfangenen Signals durch das ausgesendete Signal erhalten wird, um das entsprechende Signal $E_0^*(t)$ zu erhalten, dann ein Signal $E_1^*(t)$ unter Berücksichtigung eines Sample des Signals $E_0^*(t)$ konstruiert wird, das für jede der $N$ ausgesendeten Rampen gebildet wird, wobei das Signal $E_1^*(t)$ aus den so genommenen $N$ Samples gebildet wird.

9. Verfahren nach Anspruch 8, **dadurch gekennzeichnet, dass** für die n-te ausgesendete Frequenzrampe $e_0(t)$ das empfangene Signal $r_0(t)$ durch Anwenden einer Phasenverschiebung gleich $n \cdot \frac{2.\pi}{N}$ auf den Lokaloszillator des Radarempfängers demoduliert wird.

**10.** Verfahren nach Anspruch 8 oder 9, **dadurch gekennzeichnet, dass** für jedes der gebildeten N Signale $E_0^*(t)$ ein entsprechendes Sample zum Zeitpunkt $t_n$ genommen wird, bestimmt durch den Ausdruck:

$$t_n = n \cdot T_{\mathrm{E0}} + n \cdot \frac{T_{\mathrm{E0}}}{N},$$

wobei $n$ den Rang der Frequenzrampe $n$ entsprechend dem betrachteten Signal $E_0^*(t)$ in der Folge der ausgesendeten Frequenzrampen repräsentiert.

**Claims**

**1.** A method for determining in real time the distance, d, from the ground to an aircraft by radar measurements, said distance d being determined, for a span of distances extending up to a given distance $d_{max}$, with a given constant resolution $R_{d0}$;

implementing the following operations:

- the emission of at least two successive frequency ramps and the reception of the signals reflected by the ground subsequent to these emissions;
- the construction, on the basis of the reflected signals received, of two signals $E_0(t)$ and $E_1(t)$, each corresponding to the reflected signal $r_0(t)$ or $r_1(t)$ originating from the successive emissions of two waveforms $e_0(t)$ and $e_1(t)$, after demodulation of the signals $r_0(t)$ and $r_1(t)$ by the corresponding wave $e_0(t)$ or $e_1(t)$ and sampling of the demodulated signal at a given frequency $F_{éch}$, said method being **characterised in that**:

said waveforms $e_0(t)$ and $e_1(t)$ being represented in a "time-frequency" space by two frequency ramps exhibiting respective slopes of variation $K_0$ and $K_1$, on two frequency bands $B_0$ and $B_1$ whose ratio $B_1/B_0$ is a given integer number, the band $B_0$ being determined as a function of the distance resolution $R_{d0}$ by the relation:

$$B_0 = {}^c/_{2\mathrm{R}_{d0}},$$

the slope $K_1$ being determined as a function of the distance $d_{max}$ by the relation:

$$K_1 = \frac{c}{2} \cdot \frac{F_{éch}}{2\alpha \cdot d_{1max}};$$

the slopes $K_0$ and $K_1$ being respectively given by the relations

$$K_0 = {}^{B_0}/_{T_{E0}}$$

and

$$K_1 = {}^{B_1}/_{T_{E1}}$$

where $T_{E0}$ and $T_{E1}$ represent the respective durations of emission of the waveforms $e_0(t)$ and $e_1(t)$, and **in that** it contains the following operations:

- the application of an FFT, on $N$ samples, to the signals $E_0(t)$ and $E_1(t)$ and determination of the spectral components $E_0$ and $E_1$ corresponding to said signals, $E_0$ corresponding to the component of lowest frequency of the spectrum of $E_0(t)$;
- the determination, on the basis of the spectral components $E_0$ and $E_1$, of the measured distances $d_0$ and $d_1$ by means of the waveforms $e_0(t)$ and $e_1(t)$ corresponding respectively to the spectral components $E_0$

and $E_1$, $d_0$ and $d_1$ being given by the relations:

$$d_0 = \frac{c}{2} \cdot \frac{E_0}{\alpha K_0}$$

and

$$d_1 = \frac{c}{2} \cdot \frac{E_1}{\alpha K_1}$$

- the determination, on the basis of $d_0$ and $d_1$, of the distance $d$ to be measured, d being given by the relation:

$$d = M \cdot d_{0max} + d_0$$

with

$$d_{0max} = \frac{c}{2} \cdot \frac{F_{0max}}{\alpha K_0} = \frac{c}{2} \cdot \frac{F_{\acute{e}ch}}{2\alpha K_0}$$

and

$$M = INT\left(\frac{d_1}{d_{0max}}\right) = INT(2 \cdot E_1 \cdot T_{\acute{e}ch}).$$

2.  The method according to claim 1, **characterised in that** it contains the following steps:

    - a first step (31) during which are determined the slopes $K_0$ and $K_1$, and frequency bands $B_0$ and $B_1$ characterising the two signals $e_0(t)$ and $e_1(t)$ as well as the durations of emission $T_{E0}$ and $T_{E1}$ of these two signals; this first step being carried out while taking into account the following parameters (35):
    - maximum distance measured: $d_{max}$,
    - required distance resolution: $R_{d0}$,
    - frequency of sampling of the signals received by the radar: $F_{\acute{e}ch}$,
    - number $N$ of points on which the spectral decomposition of the signals must be performed;
    - a second step (32) of emission during which:
    - the radar emits at least two waves corresponding to a chosen type of emission (36), at least one of these waves consisting of a frequency ramp of band $B_0$ and of slope $K_0$;
    - the radar receives the reflected signals resulting from the reflection by the ground of the emitted waves;
    - the signals $E_0(t)$ and $E_1(t)$ are formed on the basis of the reflected signals received;
    - a third step (33) during which are carried out the spectral decomposition by FFT on $N$ points of the signals $E_0(t)$ and $E_1(t)$ and the determination of the spectral components $E_0$ and $E_1$;
    - a fourth step (34) during which is carried out the calculation of the distance $d$ on the basis of $E_0$ and $E_1$.

3.  The method according to claim 2, **characterised in that** the fourth step 34 contains:

    - a first sub-step (341) of calculating the distance $d_1$ defined by: $d_1 = \frac{c}{2} \cdot \frac{G_1}{\alpha K_1}$ where $G_1$ represents the integer part of the spectrum of $E1(t)$
    - a second sub-step (342) of calculating the scale factor $M$ defined by:

$$M = INT\left(\frac{2E_1}{F_{\acute{e}ch}}\right);$$

- a third sub-step (343) of calculating the distance $d_0$ defined by: $d_0 = \frac{c}{2} \cdot \frac{H_0}{\alpha K_0}$ where $H_0$ represents the integer part of the value of the first spectral line, $E_0$, of the spectrum of $EO(t)$;
- a fourth sub-step (344) of calculating the distance $d$, defined by:

$$d = M \cdot d_{0max} + d_0.$$

4. The method according to one of claims 2 or 3, **characterised in that** the waveforms emitted by the radar in the course of the second step (32) of the method consist of a first frequency ramp $e_0(t)$ (61) of band $B_0$ and of slope $K_0$ followed by a second frequency ramp $e_1(t)$ (62) of band $B_1$ and of slope $K_1$.

5. The method according to claim 4, **characterised in that** the signal $e_0(t)$ and the signal $e_1(t)$ have distinct durations of respective emission $T_{E0}$ and $T_{E1}$ and occupy one and the same frequency band $B$, so that their respective slopes $K_0$ and $K_1$ are expressed by:

$$K_0 = \frac{B}{T_{E0}}$$

and

$$K_1 = \frac{B}{T_{E1}}.$$

6. The method according to one of claims 4 or 5, **characterised in that** the signals $E_0(t)$ and $E_1(t)$ are obtained after demodulation of the received signals $r_0(t)$ and $r_1(t)$ by the emitted signals $e_0(t)$ (61) and $e_1(t)$ (62), the signals $E_0(t)$ and $E_1(t)$ being thereafter sampled in the course of the third step (33) at the frequency $F_{éch}$ so as to obtain the signals $E_0^*(t)$ and $E_1^*(t)$ , the FFT spectral analysis of which is carried out.

7. The method according to one of claims 2 or 3, **characterised in that** the waveforms emitted by the radar in the course of the second step (32) of the method consist of a recurrent string of N identical frequency ramps $e_0(t-nT_{E0})$ (71), mutually shifted in time by a duration $T_{E0}$ equal to the emission time of a ramp, of band $B$ and of duration $T_{E0}$.

8. The method according to claim 7, **characterised in that** for each of the N emitted frequency ramps (71), the signal $E_0(t)$ obtained by demodulation of the signal received by the signal emitted is sampled to obtain the corresponding signal $E_0^*(t)$ , and then a signal is constructed by considering a sample of the signal $E_0^*(t)$ formed for each of the $N$ emitted ramps, the signal $E_1^*(t)$ consisting of the $N$ samples thus taken.

9. The method according to claim 8, **characterised in that** for the nth frequency ramp $e_0(t)$ emitted the received signal $r_0(t)$ is demodulated by applying a phase shift equal to $\frac{n \cdot 2.\pi}{N}$ to the local oscillator of the radar receiver. N

10. The method according to one of claims 8 or 9, **characterised in that**, for each of the $N$ signals $E_0^*(t)$ formed, one collects the sample corresponding to the instant $t_n$ determined by the expression:

$$t_n = n \cdot T_{E0} + n \cdot \frac{T_{E0}}{N},$$

in which $n$ represents the rank, in the string of emitted frequency ramps, of the frequency ramp $n$ corresponding to the signal $E_0^*(t)$ considered.

Fig. 1

Fig. 2

35

Paramètres d'entrée

$d_{max,}$ $R_{d0},$ $F_{éch,}$ $N$

Calculs de

$B_0,$ $T_{E0},$ $K_0,$ et $K_1$    31

Types de
forme d'onde

36

Emission formes d'ondes

Réception signal réfléchi

Formation $E_0(t)$ et $E_1(t)$    32

Traitement de $E_0(t)$ et $E_1(t)$
par FFT sur N points

Détermination de $E_0$ et $E_1$    33

Détermination de $d$    34

$$d = M \cdot d_{0max} + d_0$$

# Fig. 3

Etape 33

34

Calcul de $d_1$

$$d_1 = \frac{c}{2} \cdot \frac{G_1}{2K_1}$$

341

Calcul de $M$

$$M = INT\left(\frac{d_1}{d_{0max}} \cdot \frac{K_0}{K_1}\right)$$

342

Calcul de $d_0$

$$d_0 = \frac{c}{2} \cdot \frac{H_0}{2K_0}$$

343

Calcul de $d$

$$d = M \cdot d_{0max} + d_0$$

344

$d$

Fig. 4

51

$D_{1max}$ (intervalle de mesure voulu)

$n_1 \cdot d_{1min} + n_0 \cdot d_{0min}$

$d_{1min}$

Analyse pleine échelle
$B_1,\ K_1,\ R_{d1}$

| 1 | 2 | | $n_1$ | | $N_1$ |

52

$d_{0max}$

$d_{0min}$

$n_0 \cdot d_{0min}$

Analyse haute résolution
$B_0,\ K_0,\ R_{d0}$

| 1 | 2 | $n_0$ | $N_0$ | 1 | 2 | $n_0$ | $N_0$ | 1 | 2 | $n_0$ | $N_0$ | 1 | 2 | $n_0$ | $N_0$ |

Distance d

Fig. 5

Fig. 6a

Fig. 6b

**Fréquence (Hz)**

$n \cdot T_{E0}$ $(n+1) \cdot T_{E0}$

$T_{E0}$

71 71 72

$B$ 74 72 71 72

$F_D$ 72

$\tau_{max}$ $\tau_{max}$ $\tau_{max}$ $\tau_{max}$ $\tau_{max}$ $\tau_{max}$

**temps (s)**

$T_{E0}$ $T_{E0}$

Récurrence 0 -------------- Récurrence n ---------------- Récurrence N-1

$$T_{E1} = N \cdot T_{E0}$$

# Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2605037 A1
- GB 2248359 A
- EP 2339369 A1